# EUROPEAN PATENT SPECIFICATION

(11) **EP 2 132 348 B1**
(45) Date of publication and mention of the grant of the patent: **18.05.2011**
(21) Application number: 08719781.0
(22) Date of filing: 20.03.2008
(51) Int. Cl.: C22C 26/00

(54) **ABRASIVE COMPACTS**
ABRASIVE PRESSKÖRPER
COMPRIMÉS ABRASIFS

(30) Priority: 22.03.2007 ZA 200702386
(43) Date of publication of application: 16.12.2009
(73) Proprietor: Element Six (Production) (Pty) Ltd., 1559 Springs (ZA)
(72) Inventor: TANK, Klaus, 1559 Springs (ZA)
(74) Representative: Benson, John Everett
(86) International application number: PCT/IB2008/051058
(87) International publication number: WO 2008/114228

(56) References cited:
- US-A- 4 664 705
- US-A1- 2005 230 156
- US-A1- 2005 263 328
- US-A1- 2006 165 993
- US-A1- 2006 272 571

## Description

### BACKGROUND OF THE INVENTION

This invention relates to abrasive compacts.

Abrasive compacts are used extensively in cutting, milling, grinding, drilling and other abrasive operations. Abrasive compacts consist of a mass of ultrahard particles, typically diamond, bonded into a coherent, polycrystalline conglomerate. The abrasive particle content of these abrasive compacts is high and there is generally an extensive amount of direct particle-to-particle bonding or contact. Abrasive compacts are generally sintered under elevated temperature and pressure conditions at which the diamond is crystallographically or thermodynamically stable.

Some abrasive compacts may additionally have a second phase which contains a catalyst/solvent or binder material. In the case of certain types of premium polycrystalline diamond compacts, this second phase is typically a metal such as cobalt, nickel, iron or an alloy containing one or more such metals.

Examples of composite abrasive compacts can be found described in US Patent Nos. 3,745,623; 3,767,371 and 3,743,489.

When diamond particles are combined with a suitable metallic solvent/catalyst, this solvent/catalyst promotes diamond-to-diamond bonding between the diamond grains, resulting in an intergrown or sintered structure. In the final sintered structure, solvent/catalyst material remains present within the interstices that exist between the sintered diamond grains. These particular PCD structures exhibit extremely enhanced properties of abrasion resistance and hardness, making them highly desirable for aggressive wear and cutting applications.

A well-known problem experienced with this type of PCD compact, however, is that the residual presence of solvent/catalyst material in the microstructural interstices has a detrimental effect on the performance of the compact at high temperatures. This decrease in performance under thermally demanding conditions is postulated to arise from two different behaviours of the metallic-diamond compact.

The first arises from differences between the thermal expansion characteristics of the interstitial solvent/catalyst and the sintered diamond network. At temperatures much greater than 400°C, the metallic component expands far more than the intergrown diamond network and can generate micro-fracturing of the diamond structure. This micro-fracturing significantly reduces the strength of the bonded diamond at increased temperatures.

Additionally, the solvent/catalyst metallic materials which facilitate diamond-to-diamond bonding under high-pressure, high-temperature sintering conditions can equally catalyse the reversion of diamond to graphite at increased temperatures and reduced pressure with obvious performance consequences. This particular effect is mostly observed at temperatures in excess of approximately 700°C.

As a result, PCD sintered in the presence of a metallic solvent/catalyst, notwithstanding its superior abrasion and strength characteristics must be kept at temperatures below 700°C. This significantly limits the potential industrial applications for this material and the potential fabrication routes that can be used to incorporate them into tools.

Potential solutions to this problem are well-known in the art. One type of approach focuses on the use of alternative or altered sintering aid materials. These materials, when present in the final sintered structure, exhibit much reduced retro-catalytic efficacy at high temperatures and typically have thermal expansion behaviours better matched with those of the sintered diamond phase. For example, US 4,793,828 describes a PCD compact with a non-catalyst/solvent based matrix phase that consists of silicon and/or silicon carbide. This compact is produced by infiltration from a silicon powder or foil source at elevated pressures and temperatures. This compact was found to be capable of withstanding temperatures of 1200°C under a vacuum or in a reducing atmosphere without significant graphitization of the diamond occurring.

However, these types of compact typically suffer other problems. Whilst in some cases it is possible to achieve a reasonable degree of diamond-to-diamond contact, the nature of this bonding is typically weaker than that which can be achieved with conventional metallic solvent/catalyst sintering aids. Hence the strength and abrasion resistance of these materials is compromised compared to conventional metallic-based PCD materials. Additionally, as discussed in US 6,213,380, the bonding of particularly silicon-containing diamond compacts to carbide substrates presents further problems because of their incompatible metallurgies.

More recently, another type of PCD has become available where non-metallic catalyst/solvents such as powdery carbonates of Mg, Ca, Sr, and Ba (or two or more types of these carbonates) are used to facilitate diamond sintering. Polycrystalline diamond materials of this kind are described, for example, in Japanese Patent Laid-Open Publications Nos. 74766/1992 and 114966/1992. PCD of this type is typically more thermally stable because of the far higher temperatures required in order to activate the catalytic action of the non-metallic catalyst material. However, this material is difficult to produce on a commercial scale since much higher temperatures and pressures are initially required to achieve sintering. Additionally, this material experiences similar attachment problems to other thermally stable PCD materials because of the non-metallic nature of the bonding phase.

Another approach attempts to retain the benefits of a metallic catalyst/solvent sintered PCD, whilst hindering the thermal degradation mechanisms experienced by these compacts after sintering. It typically focuses on post-sintering reduction or removal of the catalytic phase through chemical leaching; or transforming or rendering the catalytic phase inert through a chemical reaction.

US Patents 4,224,380 and 4,288,248 describe polycrystalline diamond compacts, initially sintered in the presence of metallic catalyst/solvents where a substantial quantity of this catalyst/solvent phase has been leached from the diamond network. This leached product has been demonstrated to be more thermally stable than the unleached product.

There are several problems that result from this approach to achieving improved thermal stability. Firstly, these leached PCD pieces with their network of empty pores possess a substantially increased surface area, which can result in increased vulnerability to oxidation (particularly at higher temperatures). This can then result in reduced strength of the PCD compact at high temperatures, albeit via a different mechanism. Additionally, the applicants have observed that leached PCD of this type, probably because of the support voids present in the structure, has a tendency to be more brittle, particularly at the tool edge, leading to edge chipping. Porous leached PCD compacts also suffer from technical attachment problems, in that they must still be brazed to a carbide substrate prior to use. (Conventional PCD compacts are typically generated with the carbide substrate attached following the sintering step.) This brazing step is technically challenging and often provides a subsequent weak point within the compact tool structure.

Problems with each of these types of solutions have led to attempts to combine more thermally stable PCD elements or components together with a more conventional metallic-based structure within the overall compact.

US 5,027,912 is a precursor to this approach, where a cutting member is disclosed that has cutting faces formed of segments of differing types of cutting materials. For example, a first segment is formed of a standard metallic PCD compact, whilst a second segment is formed of a thermally stable diamond product material. This type of tool is typically produced using pre-formed or presintered PCD elements of each type which are then brazed or attached into the tool. The attachment problems and complexities previously discussed for thermally stable types of PCD would still be experienced here.

JP 59119500 claims an improvement in the performance of PCD sintered materials after a chemical leaching treatment of only the working or top surface. This treatment dissolves and removes the metallic catalyst/solvent matrix only in an area immediately adjacent to the working surface. US patents 6,544,308 and 6,562,462 also describe the manufacture and behaviour of such PCD compacts. It is claimed that this approach has merit because it preserves the advantages of metallic-based PCD in the area of attachment to the carbide substrate, whilst providing for a more thermally stable PCD in the area of the working surface. This approach appears to have some merit; however, there are substantial technical difficulties in preventing the leaching process from removing metallic catalyst/solvent material from the bulk PCD and compromising the carbide substrate itself. Additionally, this multiple step production process is expensive and time-consuming.

US 6,248,447 discloses a compact structure where a second thermally stable PCD element is structurally embedded within a conventional metallic-sintered PCD component. This separately formed PCD element incorporates a carbonate as a sintering catalyst/solvent, and is at least partially surrounded by a support body of metallic-sintered PCD. The final compact is typically produced by sintering the metallic PCD in a second step after incorporation of the presintered carbonate-based element into the bulk unsintered compact preform. In this case, the incorporated thermally stable element is what would be termed macroscopic, or of large scale relative to the diamond particle grain size present in the metallic PCD support body.

US20060266558 discloses a similar type of PCD compact that includes a thermally stable region positioned adjacent to a surface of the compact. The thermally stable region is formed from consolidated materials that are thermally stable at temperatures greater than about 750°C. This thermally stable region occupies a partial portion of or the entire ultra-hard material body. The ultra-hard material body can comprise a composite of separate ultra-hard material elements that each form different regions of the body, at least one of the regions being thermally stable. The ultra-hard material body is attached to a desired substrate, an intermediate material is interposed between the body and the substrate, and the intermediate material joins the substrate and body together by high pressure/high temperature process. The ultra-hard material body can be provided having a multiplicity of different layers, bodies, or regions formed from the same or different type of ultra-hard materials or less hard materials that are each joined together during a HpHT process.

The problem with these approaches is that any spatially restricted thermally stable volume will have an efficacy limited by its spatial occurrence in the tool. Also, the significant differences between the material properties of the thermally stable PCD phase and the metallic-based PCD leads to considerable structural stresses arising in the tool, which can particularly be exacerbated by elevated temperatures.

### SUMMARY OF THE INVENTION

According to the present invention, there Is provided a polycrystalline diamond abrasive compact comprising a primary polycrystalline diamond (PCD) material of bonded diamond particles and a secondary PCD material interspersed through the primary PCD material or a region thereof, characterised in that the secondary PCD material comprises particulates or granules of thermally stable polycrystalline diamond (TSPCD) material.,wherein the TSPCD particulates or granules comprise
- non-metallic catalyst/solvent sintered PCD;
- leached PCD; or
- diamond particles in a sintered ceramic matrix, particularly diamond in a silicon-based ceramic matrix;
   or
- mixtures thereof.

Typically, the particulates or granules of TSPCD are evenly or homogenously dispersed within the primary PCD material or a region thereof.

In particular, the primary PCD material comprises conventional metallic catalyst/solvent based PCD, which is formed in the presence of finely dispersed particulates or granules of presintered TSPCD at high pressure and temperature. Alternatively, the particulates or granules of TSPCD may be formed *in situ*, typically by sintering at high pressure and temperature.

The particulates or granules of TSPCD are preferably larger than the starting size of the Individual diamond particles used to form the primary or metallic PCD, but are still of very fine scale relative to the overall compact size.

The optimal size for the TSPCD particulates or granules appears to lie in the range of between 1 and 500µm, more preferably between 5 and 250µm. The average size of the individual diamond grains within these particulates or granules can range from nano-sized up to about 50µm, where an optimal size will be selected depending on the final desired material properties. The distribution of grain sizes in the TSPCD particulates or granules can additionally be multimodal.

Typically these are produced in a separate sintering step, crushed or milled down to the appropriate size and then incorporated into the unsintered powder mix for the conventional primary or metallic-based PCD prior to sintering. Alternatively, the precursor materials for forming the TSPCD particulates or granules can be incorporated into the unsintered powder mix and formed into the TSPCD particulates or granules *in situ* during sintering.

It has been found that the mass percent of the presintered TSPCD can range from slightly greater than 2% to slightly less than 50 mass%, preferably between 10% and 40 mass%. Varying this mass percent allows specific properties of the composite to be tailored to fit the needs of particular applications. It has also been found that this approach has the most significant benefit in improving the performance of primary PCD materials with an average diamond grain size of 50µm or less, more preferably 25µm or less.

The invention extends to the use of the abrasive compacts of the invention as abrasive cutting elements, for example for cutting or abrading of a substrate or in drilling applications.

### BRIEF DESCRIPTION OF ACCOMPANYING FIGURES

- Figure 1: is a scanning electron microscope (SEM) image which shows the microstructure of a polycrystalline diamond compact (PCD) of Example 1, wherein thermally stable polycrystalline diamond granules are surrounded by a primary polycrystalline diamond matrix;
- Figure 2: is a bar graph showing the difference in thermal stability between the PCD compact of Figure 1 and a conventional diamond compact;
- Figure 3: is a bar graph showing the difference in oxidation resistance between the PCD compact of Figure 1 and a conventional diamond compact;
- Figure 4: is a bar graph showing the difference in abrasion resistance between the PCD compact of Figure 1 and a conventional diamond compact;
- Figure 5: is a SEM image which shows the microstructure of a polycrystalline diamond compact (PCD) of Example 2, wherein thermally stable polycrystalline diamond granules are surrounded by a primary polycrystalline diamond matrix;
- Figure 6: is a bar graph showing the difference in thermal stability between the PCD compact of Figure 5 and a conventional diamond compact; and
- Figure 7: is a bar graph showing the difference in oxidation resistance between the PCD compact of Figure 5 and a conventional diamond compact.

### DESCRIPTION OF THE EMBODIMENTS

The present invention is directed to polycrystalline diamond abrasive compacts, in particular ultrahard polycrystalline diamond abrasive compacts, made under high pressure/high temperature conditions. The polycrystalline diamond abrasive compacts are characterised in that there are additionally present in the primary PCD compact material finely dispersed particulates or granules of thermally stable PCD.

The primary diamond particle mass will be subjected to known temperature and pressure conditions necessary to produce an abrasive compact. These conditions are typically those required to synthesize the diamond abrasive particles themselves. Generally, the pressures used will be in the range 40 to 70 kilobars and the temperature used will be in the range 1300°C to 1700°C.

The diamond compact will generally be bonded to a cemented carbide support or substrate forming a composite diamond compact. To produce such a composite diamond compact, the mass of diamond particles will be placed on a surface of a cemented carbide body before it is subjected to the elevated temperature and pressure conditions necessary for compact manufacture. The cemented carbide support or substrate may be any known in the art such as cemented tungsten carbide, cemented tantalum carbide, cemented titanium carbide, cemented molybdenum carbide or mixtures thereof. The binder metal for such carbides may be any known in the art such as nickel, cobalt, iron, manganese or an alloy containing one or more of these metals. Typically, this binder will be present in an amount of 10 to 20 mass %, but this may be as low as 6 mass %. Some of the binder metal will generally infiltrate the diamond compact during compact formation.

The diamond particles used in the present process can be natural or synthetic. The particle mixture may be multimodal, i.e. comprises a mixture of fractions that differ from one another discernibly in their average grain size. By "average grain size" it is meant that the individual grains have a range of sizes with the mean grain size representing the "average". Hence the major amount of the grains will be close to the average size although there will be a limited number of grains above and below the specified size. The peak in the distribution of the grains will therefore be at the specified size. In the sintered compact, the term "average grain size" is to be interpreted in a similar manner. However, the use of the term "average particle size" to describe individual agglomerates or particulates applies to the size of the entire mass and not to the individual grains which comprise it. This difference should be evident from the context of the description.

The diamond compacts produced by the method of the invention will additionally have a binder phase present, in the form of a catalyst/solvent for the diamond particles used. Catalyst/solvents for diamond are well known in the art. The binder is preferably cobalt, nickel, iron or an alloy containing one or more of these metals. This binder can be introduced either by infiltration into the mass of abrasive particles during the sintering treatment, or in particulate form as a mixture within the mass of abrasive particles. Infiltration may occur from either a supplied shim or layer of the binder metal or from the carbide support. Typically a combination of approaches is used.

During the high pressure, high temperature treatment, the catalyst/solvent material melts and migrates through the compact layer, acting as a catalyst/solvent and hence causing the ultrahard particles to bond to one another through the formation of reprecipitated ultrahard phase. Once manufactured, the compact therefore comprises a coherent matrix of ultrahard diamond particles bonded to one another, thereby forming an ultrahard polycrystalline diamond composite material with many interstices containing binder or solvent/catalyst material as described above. In one form, the ultrahard diamond phase constitutes between 75% and 95% by volume and the solvent/catalyst materials and other phases, the other 5% to 25%.

It has surprisingly been found that the additional presence of a finely divided distribution of thermally stable PCD particulates or granules within the overall PCD structure causes a significant improvement in the behaviour of the PCD in various thermally demanding applications. This is surprising because it would be anticipated that the bulk strength or wear resistance of the compact would be determined by the continuous matrix (i.e. primary PCD) phase. Additionally, the TSPCD particulates or granules are not significantly bonded to one another and therefore it was anticipated that compromising the bonding phase holding them in place would equally compromise the overall material. It was therefore anticipated that thermal degradation experienced in this bulk material would significantly overshadow any improvement seen from the TSPCD particulates or granules. Nonetheless, it appears that even at fairly low levels, the occurrence of TSPCD islands in the standard PCD microstructure can have substantial advantages. Optimal levels of TSPCD particulates in the volume where they are introduced appear to be of the order of 2 mass % up to slightly less than 50 mass %, or more preferably between 10 mass % and 40 mass %.

The term TSPCD is taken to refer to any PCD material that exhibits a positive displacement of the onset of any thermal degradation mechanism to higher temperatures relative to that observed for the primary matrix PCD. This will typically include any PCD material that does not experience any significant property deterioration at temperatures above 700°C.

The TSPCD particulates or granules may be selected from a variety of material types such as (but not limited to):
- PCD sintered in the presence of non-metallic catalyst/solvents such as a carbonate, sulphate or hydroxide salt of an alkali or alkaline earth metal, for example;
- leached PCD i.e. PCD material generated using standard metallic catalyst/solvents where the metallic phase has subsequently been largely removed by some type of physico-chemical treatment; and
- diamond particles in a sintered ceramic matrix, where the ceramic matrix can be oxides, nitrides, carbides and any combination thereof.

Regarding this later category of TSPCD materials, of particular note are TSPCD materials where a silicon-based ceramic is used as the matrix. These matrices include: silicon carbide (SiC), silicon nitride (Si₃N₄), and derived ceramics such as siafons and materials formed by combinations of silicon, carbon, nitrogen, aluminium, titanium and oxygen. A preferred example of this material is diamond in a silicon carbide matrix. This material type may be made by the reaction of diamond with molten silicon at various conditions of temperature and pressure, including ultra-high pressure (40 to 90kbar) and temperatures higher than the melting point of silicon at the chosen pressure and also methods including free sintering with temperature alone. TSPCD comprising diamond in silicon-based ceramic materials may also be made using pre-ceramic polymers as precursors. In this case, the resultant ceramic binder may be of nano-grain size or amorphous in character.

Also of particular interest are TSPCD particulate materials generated by crushing diamond in titanium- and zirconium-based ceramics such as (but not limited to) titanium nitride, titanium carbide, and titanium carbonitrides; and also general transition metal carbides, nitrides and carbonitrides.

In one embodiment of the invention, the TSPCD particulates are produced in a separate sintering step, although this may not necessarily be a high pressure or high temperature sintering step. Typically this would also not be in the presence of a carbide substrate or backing. The sintered mass would then be crushed or milled down to the appropriate size. It is then incorporated in particulate or agglomerated/granular form into the unsintered powder mix for a conventional metallic-based PCD prior to sintering.

One method for generating compacts according to this embodiment of the invention is characterised by the addition of presintered thermally stable PCD particulates or agglomerates/granules to the unsintered diamond abrasive particle mixture that is used. This addition process does not typically require any additional presynthesis processes, although it is anticipated that certain types of TSPCD particulates may function best when coated with a transition layer or activating coating to encourage easy bonding to the bulk PCD matrix surround, or to prevent excessive chemical interaction between the TSPCD and primary PCD material.

In a further embodiment of the invention the TSPCD particulates may be formed *in situ*. In this embodiment the precursor materials for forming the TSPCD particulates can be incorporated into the unsintered diamond particle mixture that is used prior to sintering. These particulates are then sintered or consolidated *in situ* during the same HpHT sintering cycle that is used to sinter the bulk PCD surround. Whilst it can be appreciated that this approach can be limited by the conditions required to sinter the PCD surround; it may be advantageous to do so.

The optimal size of the TSPCD particulates or granules in the diamond abrasive compact has been found to be of the order of 1 to 500µm, more preferably between 5 and 250µm. When the particulates are too fine, it seems that insufficient coherent TSPCD character appears within the structure to have a significant effect; and when they are too coarse, stresses arising from structural mismatch between the two material types appear to affect the compact adversely.

It is not necessarily required that the TSPCD particulates or granules be introduced throughout the polycrystalline diamond composite material. Substantial benefits may also be recognised where only the composite material in certain regions nearest the working surface has added TSPCD particulates or granules. However, where improved performance is typically required in the bulk of the PCD compact, it may be required that all, or the larger part, of the polycrystalline diamond composite material has added TSPCD particulates or granules. For ease of manufacture, it may also be preferred that the entire composite bulk is of this type.

### EXAMPLES

This invention will now be illustrated by way of the following non-limiting examples:

### Example 1

A conventional thermally stable PCD compact was produced using elemental silicon to infiltrate and react with diamond grains to produce a SiC-diamond compact under conditions of elevated pressure and temperature. The diamond grains in this case were approximately 20µm in size. This compact was not backed by a carbide substrate. The sintered body was then crushed and milled to produce particulates or granules of agglomerated or sintered TSPCD. These particulates or granules were then screened to acquire presintered particles or granules of the desired size, namely between 50 and 150µm.

A multimodal mixture of diamond powders was then prepared, as per typical diamond powder mix preparation for conventional PCD synthesis. The average diamond grain size for this metallic-based PCD was approximately 20µm. The TSPCD agglomerate particles were then added to this mixture at a level of 30 mass % and mixed thoroughly. This powder mixture was then sintered onto a standard cemented WC substrate under typical pressure and temperature conditions in order to produce a polycrystalline diamond layer well bonded to the substrate.

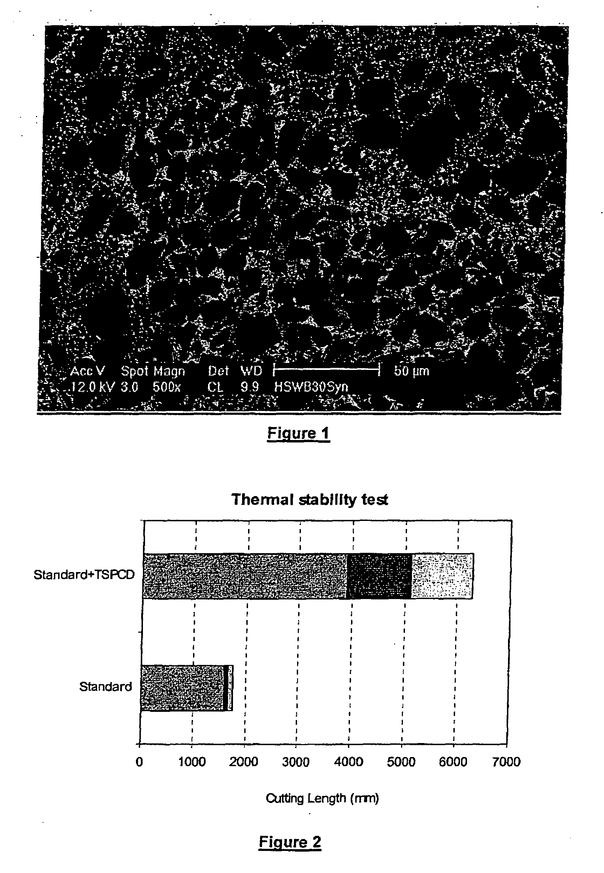

A scanning electron microscope (SEM) image shown in accompanying Figure 1 illustrates the microstructure of the resultant PCD in which secondary PCD material in the form of TSPCD granules are surrounded by a primary PCD matrix.

The micrograph shows that the granules or particulates making up the secondary PCD are larger than the individual diamond grains of the primary (metallic-based) PCD. The average size of the TSPCD granules or particulates is 100µm, whilst the individual grain size of the constituent diamond grains is approximately 20µm. The dark regions in the micrograph represent the diamond phase, the grey regions represent the binder/catalyst cobalt and the lighter regions represent the tungsten carbide. The grey regions in the TSPCD granule represent silicon carbide (SiC). Electron diffraction spectroscopy (EDS) was further used to characterise the elemental distribution in the sample. This analysis confirmed that the lighter regions surrounding the TSPCD secondary phase represent the presence of cobalt and silicon, where X-Ray diffraction (XRD) further confirmed the formation of CoSi from these two metals. The source of Si is the secondary phase TSPCD and Co comes from the binder present in the primary phase. SEM analysis showed that the TSPCD granules were reasonably homogenously distributed throughout the primary phase PCD structure.

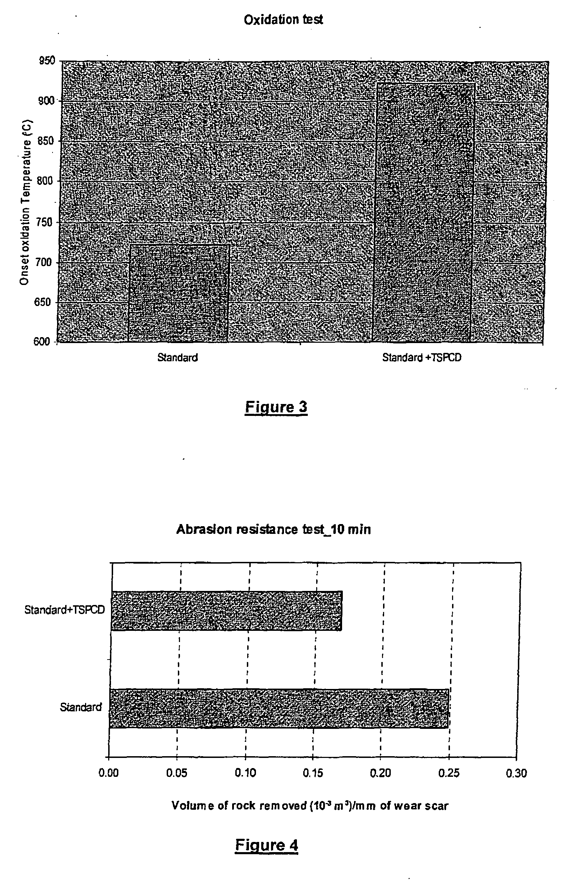

The composite diamond compact of this example was subjected to a thermal stability test and compared with a conventional composite diamond compact having a PCD layer with cobalt as the second phase. This test showed a clear improvement in the thermal stability of the composite diamond compact of the invention when compared to the standard (the conventional composite diamond compact), as is shown graphically in accompanying Figure 2. The composite diamond compact of this example was then compared with the standard in an oxidation resistance test, and again proved significantly superior to the standard conventional diamond compact as can be seen graphically in accompanying Figure 3.

The composite diamond compact of this example was also compared with the standard diamond compact in a standard granite wear (abrasion resistance) test. The PCD comprising secondary phase TSPCD showed a reduced abrasion resistance compared to the standard by about 30%, as can be seen graphically in accompanying Figure 4. It is anticipated that the abrasion resistance of the material of this invention could be significantly improved by further optimising the amount of the secondary phase TSPCD particulates that are incorporated.

### Example 2

Similarly to Example 1, TSPCD particulates or granules were prepared with diamond grains of approximately 6µm in size and were screened to the desired size of between 30 and 100 µm.

A multimodal mixture of diamond powders was then prepared, as per typical diamond powder mix preparation for conventional PCD synthesis. The average diamond grain size for this metallic-based PCD was approximately 10µm. The TSPCD granules were then added to this mixture at a level of 20 mass % and mixed thoroughly. This powder mixture was then sintered onto a standard cemented tungsten carbide substrate under typical HpHT conditions in order to produce a polycrystalline diamond layer well-bonded to the substrate.

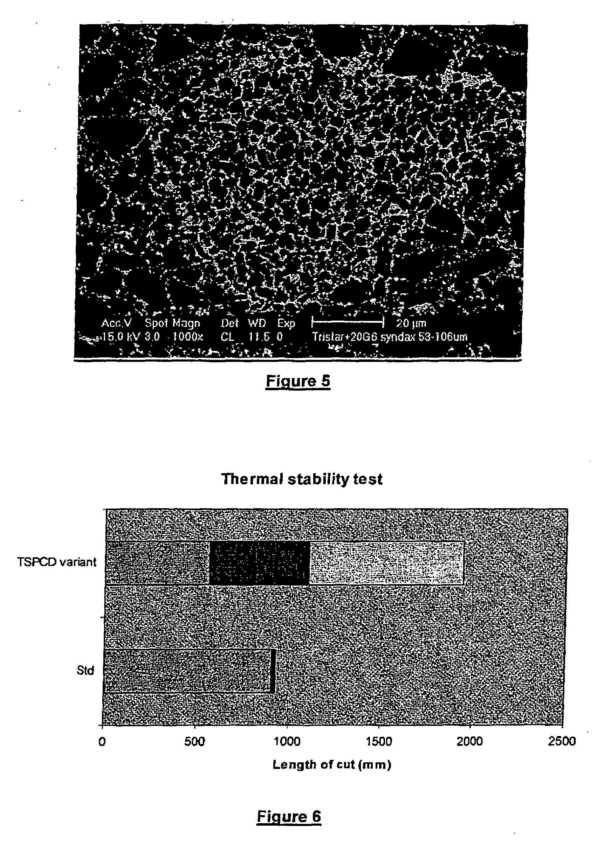

SEM analysis of the resultant material shows the microstructure of the resultant PCD compact with a typical TSPCD granule surrounded by the primary PCD matrix (as shown in accompanying Figure 5). This micrograph shows that the granules or particulates making up the secondary TSPCD are larger than the individual diamond grains of the primary (metallic) PCD. In this example the diamond grain size of the TSPCD particulates is finer than the diamond grain size of the surrounding primary PCD regions.

The sintered compact of this example was then subjected to a thermal stability test and compared with a conventional composite diamond compact. This test clearly showed an improvement in the thermal stability of the composite diamond compact of the invention when compared to the standard conventional PCD compact, as shown graphically in accompanying Figure 6. It is anticipated that any variability in thermal stability could be further improved by improving the homogeneity of the distribution of TSPCD granules in the PCD compact using conventional mixing technologies.

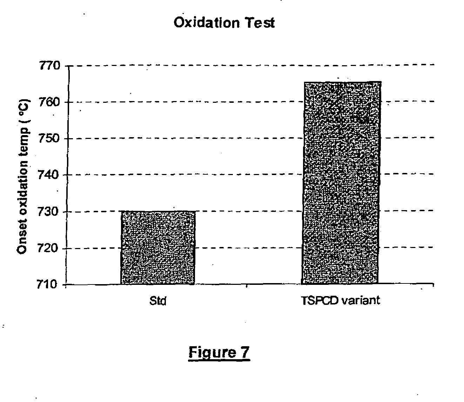

The composite diamond compact of this example was also compared with the standard in an oxidation resistance test, and proved superior, as can be seen graphically in accompanying Figure 7.

## Claims

1. A polycrystalline diamond abrasive compact comprising a primary polycrystalline diamond (PCD) material of bonded diamond particles and a secondary PCD material interspersed through the primary PCD material or a region thereof, **characterised in that** the secondary PCD material comprises particulates or granules of thermally stable polycrystalline diamond (TSPCD) material, wherein the TSPCD particulates or granules comprise non-metallic catalyst/solvent sintered PCD, leached PCD, or diamond particles in a sintered ceramic matrix, or a combination thereof.

2. A polycrystalline diamond abrasive compact according to clam 1, wherein the particulates or granules of TSPCD are evenly or homogeneously dispersed within the primary PCD material or a region thereof.

3. A polycrystalline diamond abrasive compact according to either one of the preceding claims, wherein the size of the TSPCD particulates or granules is in the range of between 1 and 500 µm.

4. A polycrystalline diamond abrasive compact according to any one of the preceding claims, wherein the size of the TSPCD particulates or granules is in the range of between 5 and 250 µm.

5. A polycrystalline diamond abrasive compact according to any one of the preceding claims, wherein the average size of the individual diamond grains within the particulates or granules range from nano-sized up to 50 µm.

6. A polycrystalline diamond abrasive compact according to any one of the preceding claims, wherein the distribution of grain sizes in the TSPCD particulates or granules is multimodal.

7. A polycrystalline diamond abrasive compact according to any one of the preceding claims, wherein the mass percent of presintered TSPCD is in the range of between 2% and 50 mass %.

8. A polycrystalline diamond abrasive compact according to any one of the preceding claims, wherein the mass percent of presintered TSPCD is in the range of between 10% and 40 mass %.

9. A polycrystalline diamond abrasive compact according to any one of the preceding claims, wherein the non-metallic catalyst/solvent comprises a carbonate, sulphate or hydroxide salt of an alkali or alkaline earth material.

10. A polycrystalline diamond abrasive compact according to any one of the preceding claims, wherein the sintered ceramic matrix comprises an oxide, nitride, carbide, or silicon based ceramic, or a combination thereof.

11. A polycrystalline diamond abrasive compact according to claim 10, wherein the silicon based ceramic comprises silicon carbide, silicon nitride, sialon or a material formed by a combination of silicon, carbon, nitrogen, aluminium, titanium and oxygen.

12. A polycrystalline diamond abrasive compact according to any one of the preceding claims, wherein the average diamond grain size of the primary PCD is 50 µm or less, preferably 25 µm or less.

13. A polycrystalline diamond abrasive compact according to any one of the preceding claims, wherein the polycrystalline diamond abrasive compact is bonded to a cemented carbide support or substrate.

14. An abrasive cutting element suitable for cutting or abrading of a substrate or in drilling applications, the abrasive cutting element comprising a polycrystalline diamond abrasive compact according to any one of claims 1 to 13.

## Patentansprüche

1. Ein polykristalliner abrasiver Diamantpresskörper umfassend ein primäres polykristallines Diamant (PCD)-Material aus gebundenen Diamantpartikeln und ein sekundäres PCD-Material, das in das primäre PCD-Material oder einen Bereich desselben eingestreut ist, **dadurch gekennzeichnet, dass** das sekundäre PCD-Material Partikel oder Körnchen aus thermisch stabilem polikristallinem Diamant (TSPCD) -Material aufweist, wobei die TSPCD-Partikel oder Körnchen mit nichtmetallischem Katalysator/Lösungsmittel gesinterte PCD, ausgelaugte PCD oder Diamantpartikel in einer gesinterten keramischen Matrix oder eine Kombination hiervon aufweisen.

2. Ein polykristalliner abrasiver Diamantpresskörper nach Anspruch 1, wobei die Partikel oder Körnchen aus TSPCD gleichmäßig oder homogen in dem primären PCD-Material oder einem Bereich derselben verteilt sind.

3. Ein polykristalliner abrasiver Diamantpresskörper nach einem der vorhergehenden Ansprüche, wobei die Größe der TSPCD-Partikel oder - Körnchen im Bereich zwischen 1 und 500 µm liegt.

4. Ein polykristalliner abrasiver Diamantpresskörper nach einem der vorhergehenden Ansprüche, wobei die Größe der TSPCD-Partikel oder - Körnchen im Bereich zwischen 5 und 250 µm liegt.

5. Ein polykristalliner abrasiver Diamantpresskörper nach einem der vorhergehenden Ansprüche, wobei die Durchschnittsgröße der einzelnen Diamantkörner innerhalb der Partikel oder Körnchen von Nano-Größe bis zu 50 µm reicht.

6. Ein polykristalliner abrasiver Diamantpresskörper nach einem der vorhergehenden Ansprüche, wobei die Verteilung der Korngrößen in den TSPCD-Partikeln oder -Körnchen multimodal ist.

7. Ein polykristalliner abrasiver Diamantpresskörper nach einem der vorhergehenden Ansprüche, wobei der Massenanteil von vorgesinterten TSPCD in dem Bereich zwischen 2 und 50 Massen-% liegt.

8. Ein polykristalliner abrasiver Diamantpresskörper nach einem der vorhergehenden Ansprüche, wobei der Massenanteil des vorgesinterten TSPCD in dem Bereich zwischen 10 und 40 Massen-% liegt.

9. Ein polykristalliner abrasiver Diamantpresskörper nach einem der vorhergehenden Ansprüche, wobei das nichtmetallische Katalysator/Lösungsmittel ein Karbonat, Sulfat oder Hydroxidsalz eines Alkali- oder Erdalkali-Materials aufweist.

10. Ein polykristalliner abrasiver Diamantpresskörper nach einem der vorhergehenden Ansprüche, wobei die gesinterte Keramikmatrix eine oxid-, nitrid-, carbid- oder siliziumbasierte Keramik oder eine Kombination hiervon aufweist.

11. Ein polykristalliner abrasiver Diamantpresskörper nach Anspruch 10, wobei die siliziumbasierte Keramik Siliziumcarbid, Siliziumnitrid, Sialon oder ein Material aufweist, das durch eine Kombination von Silizium, Kohlenstoff, Stickstoff, Aluminium, Titan und Sauerstoff gebildet wird.

12. Ein polykristalliner abrasiver Diamantpresskörper nach einem der vorhergehenden Ansprüche, wobei die durchschnittliche Diamantenkorngröße des primären PCD 50 µm oder weniger, vorzugsweise 25 µm oder weniger beträgt.

13. Ein polykristalliner abrasiver Diamantpresskörper nach einem der vorhergehenden Ansprüche, wobei der polykristalline abrasive Diamantpresskörper zu einem zementlerten Karbidträger oder Substrat gebunden ist.

14. Ein abrasives Schneidelement, das zum Schneiden oder Abschleifen eines Substrats oder in Bohranwendungen geeignet ist, wobei das abrasive Schneidelement einen polykristallinen abrasiven Diamantpresskörper nach einem der Ansprüche 1 bis 13 aufweist.

## Revendications

1. Comprimé abrasif en diamant polycristallin comprenant un matériau en diamant polycristallin primaire (PCD) de particules de diamant liées et un matériau PCD secondaire éparpillé dans le matériau PCD primaire ou une région de celui-ci, **caractérisé en ce que** le matériau PCD secondaire comprend des particules ou granules de matériau en diamant polycristallin thermiquement stable (TSPCD), les particules ou granules de TSPCD comprenant du PCD fritté par un solvant/catalyseur non métallique, du PCD lixivié, ou des particules de diamant dans une matrice céramique frittée, ou une de leurs combinaisons.

2. Comprimé abrasif en diamant polycristallin selon la revendication 1, dans lequel les particules ou granules de TSPCD sont dispersés, de manière uniforme ou homogène, à l'intérieur du matériau PCD primaire ou d'une région de celui-ci.

3. Comprimé abrasif en diamant polycristallin selon l'une ou l'autre des revendications précédentes, dans lequel la taille des particules ou granules de TSPCD est située dans la plage comprise entre 1 et 500 µm.

4. Comprimé abrasif en diamant polycristallin selon l'une quelconque des revendications précédentes, dans lequel la taille des particules ou granules de TSPCD est située dans la plage comprise entre 5 et 250 µm.

5. Comprimé abrasif en diamant polycristallin selon l'une quelconque des revendications précédentes, dans lequel la taille moyenne des grains de diamant individuels à l'intérieur des particules ou granules va de la plage nanométrique jusqu'à 50 µm.

6. Comprimé abrasif en diamant polycristallin selon l'une quelconque des revendications précédentes, dans lequel la distribution des tailles de grains dans les particules ou granules de TSPCD est multimodale.

7. Comprimé abrasif en diamant polycristallin selon l'une quelconque des revendications précédentes, dans lequel le pourcentage en masse de TSPCD pré-fritté est situé dans la plage comprise entre 2 % et 50 % en masse.

8. Comprimé abrasif en diamant polycristallin selon l'une quelconque des revendications précédentes, dans lequel le pourcentage en masse de TSPCD pré-fritté est situé dans la plage comprise entre 10 % et 40 % en masse.

9. Comprimé abrasif en diamant polycristallin selon l'une quelconque des revendications précédentes, dans lequel le solvant/catalyseur non métallique comprend un sel carbonate, sulfate ou hydroxyde d'un matériau alcalin ou alcalino-terreux.

10. Comprimé abrasif en diamant polycristallin selon l'une quelconque des revendications précédentes, dans lequel la matrice céramique frittée comprend une céramique à base d'oxyde, nitrure, carbure ou silicium, ou une de leurs combinaisons.

11. Comprimé abrasif en diamant polycristallin selon la revendication 10, dans lequel la céramique à base de silicium comprend du carbure de silicium, du nitrure de silicium, du sialon ou un matériau formé par une combinaison de silicium, carbone, azote, aluminium, titane et oxygène.

12. Comprimé abrasif en diamant polycristallin selon l'une quelconque des revendications précédentes, dans lequel la taille de grains de diamant moyenne du PCD primaire est de 50 µm ou moins, de préférence de 25 µm ou moins.

13. Comprimé abrasif en diamant polycristallin selon l'une quelconque des revendications précédentes, lequel comprimé abrasif en diamant polycristallin est lié à un substrat ou support en carbure cémenté.

14. Elément de découpe abrasif adapté à la découpe ou à l'abrasion d'un substrat ou à des applications de forage, l'élément de découpe abrasif comprenant un comprimé abrasif en diamant polycristallin selon l'une quelconque des revendications 1 à 13.
